# EUROPÄISCHE PATENTANMELDUNG

(11) **EP 3 293 475 A1**
(43) Veröffentlichungstag der Anmeldung: **14.03.2018**
(21) Anmeldenummer: 16020325.3
(22) Anmeldetag: 07.09.2016
(51) Int. Cl.: F25J 1/00, F25J 1/02, F01K 25/00

(54) **VERFAHREN UND METHODE ZUR SPEICHERUNG UND RÜCKGEWINNUNG VON ENERGIE**

(71) Anmelder: Linde Aktiengesellschaft, 80331 München (DE)
(72) Erfinder: Alekseev, Alexander, 82515 Wolfratshausen (DE)
(74) Vertreter: Imhof, Dietmar

(57) **Zusammenfassung**

Die Erfindung betrifft ein Verfahren zum Speichern und Rückgewinnen von Energie, bei dem eine tiefkalte Speicherflüssigkeit bereitgestellt wird, die in einem ersten Betriebsmodus zumindest zum Teil unter Verwendung eines Druckluftstroms gebildet wird, der abgekühlt und zumindest teilweise verflüssigt wird, und bei dem unter Verwendung zumindest eines Teils der Speicherflüssigkeit in einem zweiten Betriebsmodus ein tiefkalter Flüssigstrom gebildet wird, der druckbeaufschlagt, erwärmt, in den gasförmigen oder überkritischen Zustand überführt und zur Gewinnung von Energie verwendet wird, wobei das Abkühlen des Druckluftstroms in dem ersten Betriebsmodus umfasst, Wärme mittels eines Wärmeaustauschfluids von dem Druckluftstrom in ein Festbettspeichersystem (9) zu übertragen, und wobei das Erwärmen des tiefkalten flüssigen Stroms in dem zweiten Betriebsmodus umfasst, Wärme mittels des Wärmeaustauschfluids aus dem Festbettspeichersystem (9) auf den Flüssigstrom zu übertragen. Es ist vorgesehen, dass das Wärmeaustauschfluid auf einem Druckniveau von 3 bis 30 bar verwendet wird, dass als das Festbettspeichersystem (9) ein Festbettspeichersystem (9) verwendet wird, das einen ersten und einen zweiten Festbettspeicher (12, 13) umfasst, die in unterschiedlichen Temperaturbereichen betrieben werden, und dass der Druckluftstrom zum Abkühlen und der Flüssigstrom zum Erwärmen jeweils einem Wärmetausch mit einem ersten Anteil des Wärmeaustauschfluids über eine erste Wärmeaustauschstrecke und einem Wärmetausch mit einem zweiten Anteil des Wärmeaustauschfluids über eine zweite Wärmeaustauschstrecke unterworfen werden, wobei der erste Anteil des Wärmeaustauschfluids vor dem Wärmetausch mit dem Druckluftstrom in dem ersten Festbettspeicher (12) abgekühlt und nach dem Wärmetausch mit dem Flüssigstrom in dem ersten Festbettspeicher (12) erwärmt wird und der zweite Anteil des Wärmeaustauschfluids vor dem Wärmetausch mit dem Druckluftstrom in dem zweiten Festbettspeicher (13) abgekühlt und nach dem Wärmetausch mit dem Flüssigstrom in dem zweiten Festbettspeicher (13) erwärmt wird. Eine entsprechende Anlage (100) ist ebenfalls Gegenstand der vorliegenden Erfindung.

## Beschreibung

Die vorliegende Erfindung betrifft ein Verfahren zur Speicherung und Rückgewinnung von Energie und eine entsprechende Anlage gemäß den jeweiligen Oberbegriffen der unabhängigen Patentansprüche.

### Stand der Technik

Beispielsweise aus der DE 31 39 567 A1 und der EP 1 989 400 A1 ist bekannt, Flüssigluft oder Flüssigstickstoff zur Netzregelung und zur Bereitstellung von Regelleistung in Stromnetzen zu verwenden.

Zu Billigstromzeiten oder Stromüberschusszeiten wird dabei Luft in einer Luftzerlegungsanlage mit einem integrierten Verflüssiger oder in einer dezidierten Verflüssigungsanlage verflüssigt. Das erhaltene Luftverflüssigungsprodukt wird in einem Speichersystem mit einem oder mehreren Tieftemperaturspeichern gespeichert. Dieser erste Betriebsmodus wird hier auch als "Verflüssigungsbetrieb" bezeichnet, welcher in einem "Energiespeicherzeitraum" durchgeführt wird.

Zu Spitzenlastzeiten wird das Luftverflüssigungsprodukt aus dem Speichersystem entnommen, mittels einer Pumpe druckerhöht und bis auf etwa Umgebungstemperatur oder höher angewärmt und damit in einen gasförmigen oder überkritischen Zustand überführt. Ein hierdurch erhaltener Hochdruckstrom wird in einer Kraftwerkseinheit in einer oder mehreren Entspannungsturbinen, ggf. mit Zwischenerwärmung und unter zusätzlichem Einsatz von Brenngas, bis auf Umgebungsdruck entspannt. Die dabei freiwerdende mechanische Leistung wird in einem oder mehreren Generatoren in elektrische Energie umgewandelt und in ein elektrisches Netz eingespeist. Dieser zweite Betriebsmodus wird hier auch als "Entnahmebetrieb" bezeichnet, welcher in einem "Energierückgewinnungszeitraum" durchgeführt wird.

Die beim Überführen des Luftverflüssigungsprodukts in den gasförmigen oder überkritischen Zustand freiwerdende Kälte kann während des Entnahmebetriebs auch gespeichert und während des Verflüssigungsbetriebs zur Bereitstellung von Kälte zur Gewinnung des Luftverflüssigungsprodukts eingesetzt werden. Hierzu können Festbettkältespeicher und Speicherflüssigkeiten eingesetzt werden.

In der EP 2 930 322 A1 wird ein Verfahren zum Speichern und Rückgewinnen von Energie vorgeschlagen, bei dem in einem Energiespeicherzeitraum ein Luftverflüssigungsprodukt gebildet und in einem Energierückgewinnungszeitraum unter Verwendung zumindest eines Teils des Luftverflüssigungsprodukts ein Druckstrom gebildet und arbeitsleistend entspannt wird. Das dort vorgeschlagene Verfahren umfasst, zur Bildung des Luftverflüssigungsprodukts verdichtete Luft zu einem ersten Anteil in einer Festbettkältespeichereinheit und zu einem zweiten Anteil in einer Gegenstromwärmetauscheinheit zu verflüssigen. Die verflüssigte Luft wird anschließend in wenigstens einer Kältegewinnungseinheit entspannt. Das Verfahren umfasst ferner, zur Bildung des Druckstroms aus zumindest einem Teil des Verflüssigungsprodukts in der Festbettkältespeichereinheit ein Entflüssigungsprodukt zu erzeugen, aus zumindest einem Teil hiervon einen Fluidstrom zu bilden, und diesen durch wenigstens eine Verbrennungseinrichtung zu führen, in der ein Brennstoff verbrannt wird. Eine entsprechende Anlage wird ebenfalls vorgeschlagen.

Es sind schließlich auch Druckluftspeicherkraftwerke bekannt, in denen Luft jedoch nicht verflüssigt, sondern in einem Verdichter verdichtet und in einer unterirdischen Kaverne gespeichert wird. In Zeiten hoher Stromnachfrage wird die Druckluft aus der Kaverne in die Brennkammer einer Gasturbine geleitet. Gleichzeitig wird der Gasturbine über eine Gasleitung Brennstoff, beispielsweise Erdgas, zugeführt und in der durch die Druckluft gebildeten Atmosphäre verbrannt. Das gebildete Abgas wird in der Gasturbine entspannt, wodurch Energie erzeugt wird.

Der Erfindung liegt die Aufgabe zugrunde, entsprechende Verfahren und Vorrichtungen, bei denen Festbettkältespeicher eingesetzt werden, zu verbessern.

### Offenbarung der Erfindung

Diese Aufgabe wird durch ein Verfahren zur Speicherung und Rückgewinnung von Energie und eine entsprechende Anlage mit den Merkmalen der unabhängigen Patentansprüche gelöst. Vorteilhafte Ausgestaltungen sind jeweils Gegenstand der abhängigen Patentansprüche sowie der nachfolgenden Beschreibung.

Vor der Erläuterung der Merkmale und Vorteile der erfindungsgemäß vorgeschlagenen Maßnahmen werden in nachfolgend verwendete Begriffe erläutert.

Unter einer "Energiegewinnungseinheit" wird hier ein Anlagenteil verstanden, der zur Erzeugung von elektrischer Energie eingerichtet ist. Eine Energiegewinnungseinheit umfasst dabei zumindest eine Entspannungsturbine, die direkt oder indirekt mit zumindest einem Generator gekoppelt ist. Die bei der Entspannung eines Fluids in der zumindest einen Entspannungsturbine frei werdende mechanische Leistung kann daher in elektrische Energie umgesetzt werden. Eine im Rahmen der vorliegenden Erfindung einsetzbare Energiegewinnungseinheit kann zumindest eine Gasturbine umfassen, deren Entspannungsturbine mit einem oder mehreren Generatoren gekoppelt sein kann, oder es kann eine adiabatische Energiegewinnungseinheit vorgesehen sein, also eine Energiegewinnungseinheit, der keine weitere Wärme als jene, die aus dem Verfahren bzw. der Anlage selbst stammt, zugeführt wird.

Unter einer "tiefkalten" Speicherflüssigkeit bzw. einem entsprechenden Fluid, einem entsprechenden Flüssigstrom usw., wird hier ein flüssiges Medium verstanden, dessen Siedepunkt deutlich unterhalb der Umgebungstemperatur liegt, z.B. bei -50 °C oder weniger, insbesondere -100 °C oder weniger. Beispiele für tiefkalte Medien sind flüssige Luft, flüssiger Sauerstoff, flüssiger Stickstoff, flüssiges Propan oder Flüssigkeiten, die reich an den genannten Verbindungen sind.

Ein "Wärmetauscher" dient zur indirekten Übertragung von Wärme zwischen zumindest zwei im Gegenstrom zueinander geführten Strömen, beispielsweise einem warmen Wärmeaustauschfluid und einem tiefkalten Flüssigstrom oder einem warmen Druckluftstrom und einem kalten Wärmeaustauschfluid. Ein Wärmetauscher kann aus einem einzelnen oder mehreren parallel und/oder seriell verbundenen Wärmetauscherabschnitten gebildet sein, z.B. aus einem oder mehreren Plattenwärmetauscherblöcken.

Ein "Verdichter" ist eine Vorrichtung, die zum Verdichten wenigstens eines gasförmigen Stroms von wenigstens einem Eingangsdruck, bei dem dieser dem Verdichtersystem zugeführt wird, auf wenigstens einen Enddruck, bei dem dieser dem Verdichtersystem entnommen wird, eingerichtet ist. Der Verdichter bildet dabei eine bauliche Einheit, die jedoch mehrere "Verdichterstufen" in Form bekannter Kolben-, Schrauben- und/oder Schaufelrad- bzw. Turbinenanordnungen aufweisen kann. Insbesondere werden diese Verdichterstufen mittels eines gemeinsamen Antriebs, beispielsweise über eine gemeinsame Welle, angetrieben.

Ein "Gebläse" zeichnet sich im Gegensatz zu einem Verdichter im Wesentlichen dadurch aus, dass seine Hauptaufgabe nicht die Verdichtung eines Gasstroms sondern primär das Fördern eines entsprechenden Gasstroms, beispielsweise durch einen Wärmetauscher, ist. Auch an einem Gebläse stellt sich jedoch ein gewisses Druckverhältnis zwischen Eingangsdruck und Enddruck, beispielsweise ein Druckverhältnis von 1,3 bis 3,0 (gegenüber einem Druckverhältnis von mehr als 3,0 bei einem typischen Verdichter) ein. Ein "Ventilator" zeichnet sich typischerweise durch ein nochmals geringeres Druckverhältnis im Bereich von 1,0 bis 1,3 aus.

Eine "Entspannungsturbine", die über eine gemeinsame Welle mit weiteren Entspannungsturbinen oder Energiewandlern wie Ölbremsen, Generatoren oder Verdichterstufen gekoppelt sein kann, ist zur Entspannung eines gasförmigen oder zumindest teilweise flüssigen Stroms eingerichtet. Sind eine oder sind mehrere Entspannungsturbinen nur mit einem oder mehreren Verdichtern oder Verdichterstufen gekoppelt und ggf. zusätzlich mechanisch gebremst, werden diese jedoch ohne extern, beispielsweise mittels eines Elektromotors, zugeführte Energie betrieben, wird hierfür der Begriff "Boosterturbine" verwendet. Eine derartige Boosterturbine verdichtet dabei zumindest einen Strom durch die Entspannung zumindest eines anderen Stroms, jedoch ohne extern, beispielsweise mittels eines Elektromotors, zugeführte Energie. Der Verdichter einer Boosterturbine wird hier als "Booster" bezeichnet.

Unter einer "Gasturbine" wird im Rahmen der vorliegenden Anmeldung eine Anordnung aus wenigstens einer Brennkammer und wenigsten einer dieser nachgeschalteten Entspannungsturbine (der Gasturbine im engeren Sinn) verstanden. In letzterer werden heiße Gase aus der Brennkammer arbeitsleistend entspannt. Eine Gasturbine kann ferner wenigstens eine von der Entspannungsturbine über eine gemeinsame Welle angetriebene Verdichterstufe aufweisen. Ein Teil der in der Entspannungsturbine erzeugten mechanischen Energie wird üblicherweise zum Antrieb der wenigstens einen Verdichterstufe eingesetzt. Ein weiterer Teil wird zur Erzeugung von elektrischer Energie in einem Generator umgesetzt.

Als Abwandlung einer Gasturbine weist eine "Verbrennungsturbine" lediglich die Brennkammer und eine dieser Brennkammer nachgeschaltete Entspannungsmaschine auf. Ein Verdichter ist üblicherweise nicht vorgesehen. Eine "Heißgasturbine" weist hingegen im Gegensatz zu einer Gasturbine statt einer Brennkammer einen Erhitzer auf. Eine Heißgasturbine kann einstufig mit einem Erhitzer und einer Entspannungsturbine ausgebildet sein. Alternativ können jedoch mehrere Entspannungsturbinen, vorzugsweise mit Zwischenerhitzung, vorgesehen sein. In jedem Fall kann insbesondere stromab der letzten Entspannungsturbine ein weiterer Erhitzer vorgesehen sein. Auch die Heißgasturbine ist vorzugsweise mit einem oder mehreren Generatoren zur Erzeugung von elektrischer Energie gekoppelt. Insbesondere eine Heißgasturbine kann in einer adiabatischen Energiegewinnungseinheit zum Einsatz kommen.

Unter einer "Tieftemperaturspeichereinheit" wird im Rahmen der vorliegenden Erfindung eine Anordnung mit wenigstens einem zur Speicherung einer tiefkalten Speicherflüssigkeit eingerichteten Tieftemperspeicher verstanden. Der oder die Tieftemperspeicher weisen Isolationsmittel auf und sind beispielsweise gemeinsam anderen Apparaten in einer Coldbox untergebracht.

Unter einem "Festbettspeicher" wird im Rahmen dieser Anmeldung eine Einrichtung verstanden, die ein festes, zur Kältespeicherung geeignetes Material aufweist und Fluidführungsmittel durch dieses Material besitzt. Bekannte Festbettspeicher, die in herkömmlichen Luftzerlegungsanlagen auch als Regeneratoren bezeichnet werden und dort auch zur Abtrennung unerwünschter Komponenten wie Wasser und/oder Kohlendioxid verwendet werden, umfassen beispielsweise mit Kanälen durchzogene Betonblöcke (bei Luftzerlegungsanlagen ungewöhnlich), (Stein-)Schüttungen und/oder geriffelte Aluminiumbleche und werden von den jeweils abzukühlenden bzw. zu erwärmenden Strömen in einander entgegengesetzter Richtung und nacheinander durchströmt. Im Rahmen dieser Anmeldung umfasst ein "Festbettspeichersystem" zwei oder mehrere Festbettspeicher oder Festbettspeichereinheiten.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücken und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche Druckverluste oder zu erwartende Druckverluste, beispielsweise aufgrund von Abkühlungseffekten, ein. Entsprechendes gilt für Temperaturniveaus. Bei den hier in bar angegebenen Druckniveaus handelt es sich um Absolutdrücke.

Werden tiefkalte Flüssigströme im Rahmen der vorliegenden Anmeldung durch Erwärmen "in einen gasförmigen oder überkritischen Zustand überführt", schließt dies einerseits einen regulären Phasenübergang durch Verdampfen ein, wenn dies bei unterkritischem Druck erfolgt. Falls entsprechende Flüssigströme jedoch bei einem Druck erwärmt werden, der oberhalb des kritischen Drucks liegt, erfolgt beim Erwärmen über die kritische Temperatur hinaus kein Phasenübergang im eigentlichen Sinn, sondern ein Übergang vom flüssigen in den überkritischen Zustand.

Flüssige und gasförmige Fluide können im hier verwendeten Sprachgebrauch reich oder arm an einer oder mehreren Komponenten sein, wobei "reich" für einen Gehalt von wenigstens 75%, 90%, 95%, 99%, 99,5%, 99,9% oder 99,99% und "arm" für einen Gehalt von höchstens 25%, 10%, 5%, 1 %, 0,1% oder 0,01% auf molarer, Gewichts- oder Volumenbasis stehen kann. Der Begriff "überwiegend" kann der soeben getroffenen Definition von "reich" entsprechen, bezeichnet jedoch insbesondere einen Gehalt von mehr als 90%. Ist hier beispielsweise von "Stickstoff" die Rede, kann es sich um ein Reingas, aber auch ein an Stickstoff reiches Gas handeln.

### Vorteile der Erfindung

Wie erwähnt, ist die Verwendung von Festbettkältespeichern (engl. Solid Bed Cold Storage) auf dem hier betrachteten Gebiet grundsätzlich bekannt. Wie aber beispielsweise in der bereits oben zitierten EP 2 930 322 A1 vorgeschlagen, wird hier die Hochdruckluft sowohl in dem Energiespeicherzeitraum als auch in dem Energierückgewinnungszeitraum direkt durch den Festbettkältespeicher geschickt. Der Festbettkältespeicher ist in diesem Fall erheblichen Belastungen ausgesetzt. Sowohl zyklische Temperaturänderungen als auch der Druckwechsel beanspruchen den Behälter, in dem das Festbett untergebracht ist. Der relativ hohe Prozessdruck sowie beide Art von Belastungen führen dazu, dass der Behälter dickwandig und aus teuren Werkstoffen gefertigt werden muss. Das Kältespeichersystem ist in diesem Fall relativ teuer, das Verfahren daher möglicherweise wirtschaftlich weniger attraktiv.

In der Anmeldung EP 2 397 669 A2 wird zwar ein System mit einem Zwischenkreislauf beschrieben (Figur 2, Bezugszeichen 214, 220, 222, 212), jedoch für den warmen Teil der Anlage (oberhalb der Umgebungstemperatur). Dabei wird die Hochdruckluft nicht direkt durch den Festbettkältespeicher geleitet, sondern im Gegenstrom zu einem Wärme- bzw. Kälteträger 214, welcher dann anschließend durch den Wärmespeicher 220 geleitet und in einem Festbettkältespeicher 212 bis auf erforderliche Temperatur abgekühlt (oder angewärmt) wird. Der dadurch gebildete Zwischenkreislauf mit dem Wärme- bzw. Kälteträger 214 wird mit Hilfe einer Pumpe 222 angetrieben. Der Zwischenkreislauf kann bei einem deutlich niedrigeren Betriebsdruck gehalten werden, deswegen kann auch der Wärmespeicher für den niedrigeren Druck ausgelegt werden, die Behälterkosten reduzieren sich. Durch die Einführung von zusätzlichen Komponenten wie Kreislaufpumpe und Wärmetauscher wird dieser Vorteil allerdings zu einem beträchtlichen Anteil reduziert.

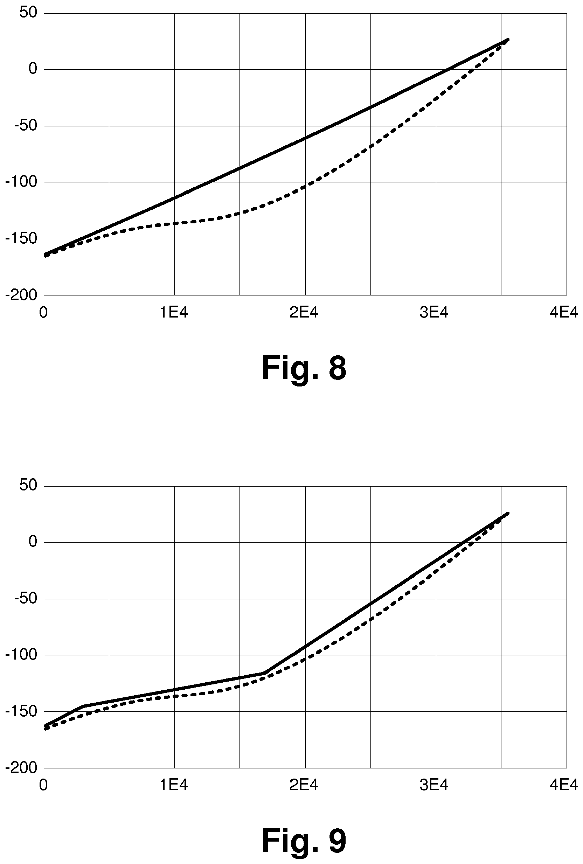

Die Lösung mit dem erwähnten Zwischenkreislauf und dem Festbettkältespeicher aus der EP 2 397 669 A2 kann nicht auf einen Tieftemperaturkältespeicher (unterhalb der Umgebungstemperatur) übertragen werden. Dies liegt darin begründet, dass die Wärmekapazität von Hochdruckluft (sowohl in der Einspeicherungsphase als auch in der Ausspeicherungsphase) bei tiefen Temperaturen einen stark ausgeprägten nichtlinearen Verlauf hat. Dieser Verlauf lässt sich nicht den typischerweise linearen Wärmekapazitätsprofilen von Zwischenkreislaufmedien angleichen, wie auch unter Bezugnahme auf die beigefügte Figur 8 erläutert. Hieraus resultieren große Temperaturdifferenzen im Wärmetauscher und große exergetische Verluste. Das Gesamtsystem wird dadurch ineffizient und nicht mehr wirtschaftlich.

Die vorliegende Erfindung löst dieses Problem nun durch ein Verfahren zum Speichern und Rückgewinnen von Energie, bei dem eine tiefkalte Speicherflüssigkeit bereitgestellt wird, die in einem ersten Betriebsmodus zumindest zum Teil unter Verwendung eines Druckluftstroms gebildet wird, der abgekühlt und zumindest teilweise verflüssigt wird, und bei dem unter Verwendung zumindest eines Teils der Speicherflüssigkeit in einem zweiten Betriebsmodus ein tiefkalter Flüssigstrom gebildet wird, der druckbeaufschlagt, erwärmt, in den gasförmigen oder überkritischen Zustand überführt und zur Gewinnung von Energie verwendet wird, wobei das Abkühlen des Druckluftstroms in dem ersten Betriebsmodus umfasst, Wärme mittels eines Wärmeaustauschfluids von dem Druckluftstrom in ein Festbettspeichersystem zu übertragen, und wobei das Erwärmen des tiefkalten flüssigen Stroms in dem zweiten Betriebsmodus umfasst, Wärme mittels des Wärmeaustauschfluids aus dem Festbettspeichersystem auf den Flüssigstrom zu übertragen.

Die zuvor erwähnten Probleme werden erfindungsgemäß dadurch überwunden, dass das Wärmeaustauschfluid auf einem Druckniveau von 3 bis 30 bar, insbesondere von 4 bis 16 bar, verwendet wird, dass als das Festbettspeichersystem ein Festbettspeichersystem verwendet wird, das einen ersten und einen zweiten Festbettspeicher umfasst, die in unterschiedlichen Temperaturbereichen betrieben werden, und dass der Druckluftstrom zum Abkühlen und der Flüssigstrom zum Erwärmen jeweils einem Wärmetausch mit einem ersten Anteil des Wärmeaustauschfluids über eine erste Wärmeaustauschstrecke und einem Wärmetausch mit einem zweiten Anteil des Wärmeaustauschfluids über eine zweite Wärmeaustauschstrecke unterworfen werden, wobei der erste Anteil des Wärmeaustauschfluids vor dem Wärmetausch mit dem Druckluftstrom in dem ersten Festbettspeicher abgekühlt und nach dem Wärmetausch mit dem Flüssigstrom in dem ersten Festbettspeicher erwärmt wird und der zweite Anteil des Wärmeaustauschfluids vor dem Wärmetausch mit dem Druckluftstrom in dem zweiten Festbettspeicher abgekühlt und nach dem Wärmetausch mit dem Flüssigstrom in dem zweiten Festbettspeicher erwärmt wird.

Auch im Rahmen der vorliegenden Erfindung wird damit ein Zwischenkreislauf mit einem Wärmeaustauschfluid geschaffen, das allerdings nun jeweils zu definierten Anteilen in wenigstens zwei unterschiedlichen Festbettspeichersystemen abgekühlt bzw. erwärmt wird. Auf diese Weise lässt sich der nichtlineare Verlauf der Wärmekapazität der Luft ausgleichen, indem beispielsweise an definierten Stellen der Wärmeaustauschstrecke nicht nur ein, sondern zwei oder mehrere entsprechend abgekühlter Fluidströme des Wärmeaustauschfluids eingesetzt werden. Dort, wo der nichtlineare Verlauf der Wärmekapazität der Luft am stärksten von einem linearen Verlauf abweicht, d.h. in entsprechenden Temperaturbereichen, kann auf diese Weise zusätzliche Wärme entzogen bzw. eingebracht werden. Diese Vorteile werden auch unter Bezugnahme auf die beigefügte Figur 9 erläutert.

Die Verwendung des erwähnten Druckniveaus für das Wärmeaustauschfluids hat mehrere Vorteile. Gleiche Druckverluste fallen bei höheren Drücken nicht so sehr stark ins Gewicht und bedeuten kleinere Verluste, z.B. bedeuten 0,5 bar Druckverlust bei einem Druckniveau von 1,5 bar, dass ein Kreislaufverdichter von 1 bar auf 1,5 bar verdichten muss, also ein Druckverhältnis 1,5 und einen entsprechend großen Verdichtungsaufwand. Die gleichen 0,5 bar Druckverlust bei einem Druckniveau von 15 bar bedeuten hingegen, dass der Kreislaufverdichter von 14,5 bar auf 15 bar verdichten muss, also das Druckverhältnis 1,03 beträgt. Der Energieaufwand wird dadurch geringer. Sämtliche Hardwarekomponenten können wegen höherer Dichte (Faktor 10 zwischen Gas bei 15 bar gegenüber 1,5 bar) deutlich kompakter und deswegen günstiger ausgeführt werden.

Insbesondere kann die zweite Wärmeaustauschstrecke eine Teilstrecke der ersten Wärmeaustauschstrecke darstellen, um den Wärmetausch an entsprechend doppelt ausgelegten Stellen zu unterstützen. Auf diese Weise lässt sich der nichtlineare Verlauf der Wärmekapazität der Luft besonders gut adressieren.

Es kann insbesondere vorgesehen sein, dass die zweite Wärmeaustauschstrecke nach dem Beginn der ersten Wärmeaustauschstrecke beginnt und/oder vor dem Ende der ersten Wärmeaustauschstrecke endet, also zu Beginn und am Ende der Wärmeaustauschstrecke nur ein Wärmetausch mit dem ersten Anteil des Wärmeaustauschfluids erfolgt. Insbesondere kann eine entsprechende Wärmeaustauschstrecke durch eine Wärmetauscherpassage eines oder mehrere Wärmetauscherpassagen mehrerer Wärmetauscher gebildet sein.

Wenn nachfolgend, insbesondere auch in den Figuren, von zwei Festbettkältespeichern und entsprechend zwei Anteilen des Wärmeüberträgerfluids die Rede ist, versteht sich, dass auch mehrere Festbettkältespeicher und mehrere Anteile des Wärmeüberträgerfluids in der erfindungsgemäßen Weise eingesetzt werden können. Je mehr entsprechender Anteile verwendet werden, desto genauer kann die der nichtlineare Verlauf der Wärmekapazität der Luft approximiert werden, allerdings jeweils unter Einsatz zusätzlicher Apparate.

Besondere Vorteile ergeben sich, wenn der zweite Anteil des Wärmeaustauschfluids vor dem Abkühlen in dem Festbettspeicher gegen den zuvor im Gegenstrom zu dem Druckluftstrom geführten zweiten Anteil des Wärmeaustauschfluids abgekühlt und nach dem Erwärmen in dem Festbettspeicher in dem zweiten Betriebsmodus gegen den danach im Gegenstrom zu dem Druckluftstrom geführten zweiten Anteil des Wärmeaustauschfluids abgekühlt wird. Auf diese Weise lässt sich dieser Strom gegen sich selbst abkühlen bzw. erwärmen.

Besondere Vorteile ergeben sich, wenn das Wärmeaustauschfluid zumindest teilweise aus einem Tieftemperaturspeichersystem entnommen und in dieses eingespeist wird, in dem auch die Speicherflüssigkeit dem ersten Betriebsmodus bereitgestellt wird. Auf diese Weise kann ein Druckausgleich zwischen dem Tieftemperaturspeichersystem und dem Zwischenkreislauf, in dem das Wärmeaustauschfluid geführt wird, hergestellt werden und es werden keine extern bereitgestellten Wärmeaustauschfluide benötigt.

Vorteilhafterweise wird der Druckluftstrom in dem ersten Betriebsmodus der Abkühlung auf einem ersten Druckniveau von 40 bis 150 bar, insbesondere von 50 bis 120 bar, zugeführt. In dem zweiten Betriebsmodus wird aus dem Flüssigstrom durch die Überführung in den gasförmigen oder überkritischen Zustand vorteilhafterweise ein Abgabestrom auf einem zweiten Druckniveau von 40 bis 180 bar, insbesondere von 50 bis 150 bar, bereitgestellt. Das zweite Druckniveau liegt vorteilhafterweise zumindest bei dem ersten Druckniveau.

Im Rahmen der vorliegenden Erfindung wird ein entsprechender Abgabestrom vorteilhafterweise zum Antreiben wenigstens einer Generatorturbine verwendet, wobei der Abgabestrom vor der Verwendung zum Antreiben der Generatorturbine insbesondere erwärmt wird. Es kann auch vorgesehen sein, eine Gasturbine unter Erhalt eines Turbinenabgases mit einem Brenngas zu befeuern, wobei das Erwärmen des Abgabestroms zumindest teilweise unter Verwendung zumindest eines Teils des Turbinenabgases durchgeführt wird. Auf diese Weise lässt sich eine Gasturbine bei Bedarf in dem zweiten Betriebsmodus unterstützen.

Vorteilhafterweise kann der in dem ersten Betriebsmodus abgekühlte und verflüssigte Druckluftstrom nach der Abkühlung auf ein Speicherdruckniveau von 3 bis 20 bar, insbesondere von 6 bis 16 bar, entspannt und auf dem Speicherdruckniveau in ein Tieftemperaturspeichersystem eingespeist werden. Dieses Druckniveau ermöglicht es gleichzeitig, entsprechendes Fluid als Wärmeaustauschfluid zu nutzen.

Eine Anlage zum Speichern und Rückgewinnen von Energie ist ebenfalls Gegenstand der vorliegenden Erfindung. Diese weist Mittel auf, die dafür eingerichtet sind, eine tiefkalte Speicherflüssigkeit bereitzustellen und diese in einem ersten Betriebsmodus zumindest zum Teil unter Verwendung eines Druckluftstroms zu bilden, der abgekühlt und zumindest teilweise verflüssigt wird, und Mittel, die dafür eingerichtet sind, unter Verwendung zumindest eines Teils der Speicherflüssigkeit in einem zweiten Betriebsmodus einen tiefkalten Flüssigstrom zu bilden wird, der druckbeaufschlagt, erwärmt, in den gasförmigen oder überkritischen Zustand überführt und zur Gewinnung von Energie verwendet wird, wobei das Abkühlen des Druckluftstroms in dem ersten Betriebsmodus umfasst, Wärme mittels eines Wärmeaustauschfluids von dem Druckluftstrom in ein Festbettspeichersystem zu übertragen, und wobei das Erwärmen des tiefkalten flüssigen Stroms in dem zweiten Betriebsmodus umfasst, Wärme mittels des Wärmeaustauschfluids aus dem Festbettspeichersystem auf den Flüssigstrom zu übertragen.

Die Anlage zeichnet sich dadurch aus, dass Mittel vorgesehen sind, die dafür eingerichtet sind, das Wärmeaustauschfluid auf einem Druckniveau von 3 bis 30 bar, insbesondere von 4 bis 16 bar, einzusetzen, dass das Festbettspeichersystem ein Festbettspeichersystem ist, das einen ersten und einen zweiten Festbettspeicher umfasst, die für einen Betrieb in unterschiedlichen Temperaturbereichen eingerichtet sind, und dass Mittel vorgesehen sind, die dafür eingerichtet sind, den Druckluftstrom zum Abkühlen und der Flüssigstrom zum Erwärmen jeweils einem Wärmetausch mit einem ersten Anteil des Wärmeaustauschfluids über eine erste Wärmeaustauschstrecke und einem Wärmetausch mit einem zweiten Anteil des Wärmeaustauschfluids über eine zweite Wärmeaustauschstrecke zu unterwerfen, bei dem der erste Anteil des Wärmeaustauschfluids vor dem Wärmetausch mit dem Druckluftstrom in dem ersten Festbettspeicher und nach dem Wärmetausch mit dem Flüssigstrom in dem ersten Festbettspeicher erwärmt wird und der zweite Anteil des Wärmeaustauschfluids vor dem Wärmetausch mit dem Druckluftstrom in dem zweiten Festbettspeicher abgekühlt und nach dem Wärmetausch mit dem Flüssigstrom in dem zweiten Festbettspeicher erwärmt wird.

Die erfindungsgemäß vorgesehene Anlage profitiert ebenfalls von den Merkmalen und Vorteilen des erfindungsgemäß vorgeschlagenen Verfahrens und ist vorteilhafterweise zur Durchführung eines solchen Verfahrens eingerichtet. Auf die entsprechenden Merkmale und Vorteile wird daher ausdrücklich verwiesen.

Die Erfindung wird nachfolgend unter Bezugnahme auf die beigefügten Zeichnungen näher erläutert, die unter anderem bevorzugte Ausführungsformen der vorliegenden Erfindung veranschaulichen.

### Kurze Beschreibung der Zeichnungen

Figur 1 zeigt eine Anlage gemäß einer bevorzugten Ausführungsform der vorliegenden Erfindung in einem ersten Betriebsmodus.
Figur 2 zeigt die in Figur 1 gezeigte Anlage in einem zweiten Betriebsmodus.
Figur 3 veranschaulicht eine Energiegewinnungseinheit zum Einsatz in einer Anlage gemäß einer bevorzugten Ausführungsform der vorliegenden Erfindung.
Figur 4 zeigt eine Hauptluftverdichtereinheit zum Einsatz in einer Anlage gemäß einer bevorzugten Ausführungsform der vorliegenden Erfindung.
Figur 5 zeigt eine Luftkonditioniereinheit zum Einsatz in einer Anlage gemäß einer bevorzugten Ausführungsform der vorliegenden Erfindung.
Figur 6 zeigt eine Gesamtverdichtereinheit zum Einsatz in einer Anlage gemäß einer bevorzugten Ausführungsform der vorliegenden Erfindung.
Figur 7 zeigt eine Luftverflüssigungseinheit zum Einsatz in einer Anlage gemäß einer bevorzugten Ausführungsform der vorliegenden Erfindung.
Figur 8 zeigt ein nicht erfindungsgemäßes Wärmeaustauschdiagramm.
Figur 9 zeigt ein Wärmeaustauschdiagramm gemäß einer bevorzugten Ausführungsform der vorliegenden Erfindung.

### Ausführliche Beschreibung der Zeichnungen

In den nachfolgenden Figuren sind einander entsprechende Elemente mit identischen Bezugszeichen veranschaulicht und werden der Übersichtlichkeit halber nicht wiederholt erläutert. In flüssigem oder gasförmigem Aggregatzustand vorliegende Fluidströme werden mit ausgefüllten (schwarzen) Flusspfeilen veranschaulicht, in gasförmigem oder überkritischem Zustand vorliegende Fluidströme mit weißen (nicht ausgefüllten) Flusspfeilen. Die in den Figuren veranschaulichte Anlage bzw. deren Teile arbeiten unter Verwendung einer Reihe von Ventilen und Armaturen, die in den Figuren jedoch nur ausschnittsweise veranschaulicht sind. Durch entsprechende Ventile beziehungsweise Armaturen unterbrochene Fluidströme beziehungsweise blockierte Leitungen sind durchkreuzt dargestellt.

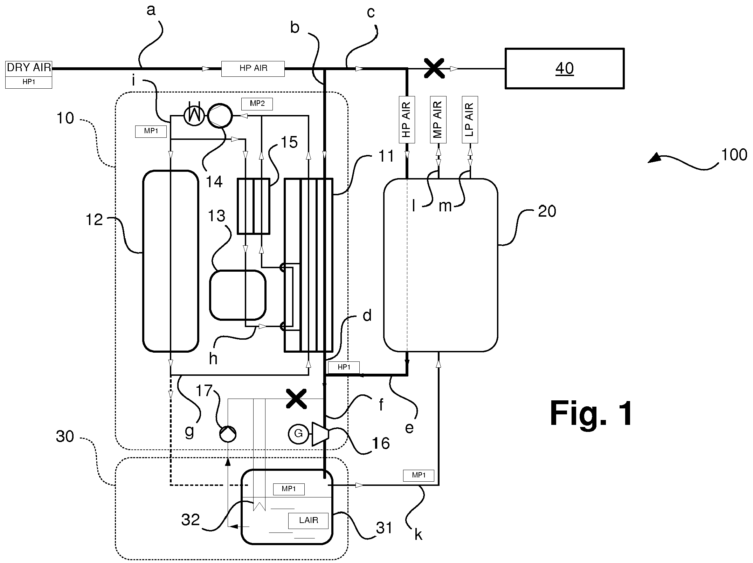

In Figur 1 ist eine Anlage gemäß einer Ausführungsform der Erfindung in einem ersten Betriebsmodus in einem Energiespeicherzeitraum, wie er zuvor mehrfach erläutert wurde, veranschaulicht, und insgesamt mit 100 bezeichnet. Die Anlage umfasst im dargestellten Beispiel eine Festbettkältespeichereinheit 10, eine Verflüssigungseinheit 20, eine Tieftemperaturspeichereinheit 30 und eine Energiegewinnungseinheit 40. Die genannten Einheiten sind lediglich der Übersichtlichkeit halber in der Figur entsprechend zusammengefasst und müssen nicht notwendigerweise baulich oder funktionell gruppiert sein.

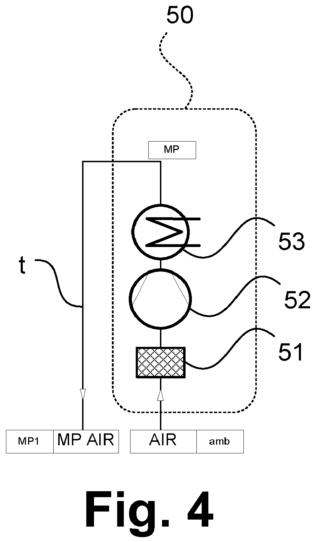

In dem Energiespeicherzeitraum wird mittels einer in Figur 1 nicht gezeigter Einheiten (siehe hierzu Figuren 4 bis 6) getrocknete Druckluft (DRY AIR, HP AIR) in Form eines Stoffstroms a auf einem ersten Druckniveau (HP1) bereitgestellt. Unter Verwendung dieser Luft werden ein erster Druckluftstrom b und ein zweiter Druckluftstrom c gebildet. Der erste Druckluftstrom b und der zweite Druckluftstrom c werden jeweils durch Abkühlen verflüssigt, wodurch entsprechende verflüssigte Stoffströme d und e erhalten werden. Die Stoffströme d und e werden zu einem Sammelstrom f vereinigt. Zum Abkühlen des ersten Druckluftstroms b wird eine Festbettspeichereinheit 10 verwendet, die hier gestrichelt umfasst veranschaulicht ist. Die Festbettspeichereinheit 10 umfasst einen Wärmetauscher 11, in dem der erste Druckluftstrom 10 über eine Wärmeaustauschstrecke einem Wärmetausch mit einem Wärmeaustauschfluid unterworfen wird. Das Wärmeaustauschfluid wird dabei im dargestellten Beispiel in unterschiedlichen Anteilen über unterschiedliche Abschnitte der Wärmeaustauschstrecke im Gegenstrom zu dem ersten Druckluftstrom durch den Wärmetauscher 11 geführt. Entsprechende Anteile sind in Figur 1 in Form der Stoffströme g und h veranschaulicht.

Das in Form der Stoffströme g und h verwendete Wärmeaustauschfluid kann beispielsweise als tiefkalte Druckluft bereitgestellt werden. Zur Abkühlung der Stoffströme g und h sind jeweils unterschiedlich dimensionierte Festbettkältespeicher 12 und 13 der zuvor erläuterten Art vorgesehen. Die Stoffströme g und h werden aus einem Stoffstrom i gebildet, welcher mittels einer Pumpe 14 auf ein erstes Kreislaufdruckniveau (MP1) gebracht wird. Stromab der Pumpe 14 ist ein Nachkühler vorgesehen, der der Übersichtlichkeit halber nicht gesondert bezeichnet ist. Die Pumpe 14 dient zum Ausgleich von Druckverlusten in der Festbettkältespeichereinheit 10, die zu einem Druckabfall auf ein zweites Kreislaufdruckniveau (MP2) führen.

Der Stoffstrom g wird nach seiner Abkühlung in dem Festbettkältespeicher 12 über die gesamte Wärmeaustauschstrecke des Wärmetauschers 11 im Gegenstrom zu dem ersten Druckluftstrom b durch den Wärmetauscher 11 geführt. Der Stoffstrom h wird zunächst durch einen Wärmetauscher 15 geführt und dort abgekühlt, bevor er in dem Festbettkältespeicher 13 weiter abgekühlt wird und anschließend über eine Teilstrecke der Wärmeaustauschstrecke des Wärmetauschers 11 im Gegenstrom zu dem Stoffstrom b durch den Wärmetauscher 11 geführt wird.

Nach einer Erwärmung in dem Wärmetauscher 11 erfolgt eine weitere Erwärmung des Stoffstroms h in dem bereits erwähnten Wärmetauscher 15. Die Stoffströme g und h werden sodann zu dem Stoffstrom i vereinigt und, wie erwähnt, von dem zweiten Kreislaufdruckniveau (MP2) auf das erste Kreislaufdruckniveau (MP1) gebracht.

Der zweite Druckluftstrom c wird in einer hier stark schematisch veranschaulichten Verflüssigungseinheit 20 zu dem Stoffstrom e verflüssigt. Nach der Vereinigung der Stoffströme d und e zu dem Stoffstrom f erfolgt eine Entspannung des Stoffstroms f in einer Generatorturbine 16, die hier als Teil der Festbettkältespeichereinheit 10 veranschaulicht ist. Nach seiner Entspannung wird der Stoffstrom f in einen Tieftemperaturspeicher 31 überführt, der hier als Teil einer Tieftemperaturspeichereinheit 30 veranschaulicht ist. Die Luft des Stoffstroms h wird hier als Flüssigluft (LAIR) auf einem Speicherdruckniveau (MP1) gespeichert.

In den Tieftemperaturspeicher 31 kann auch ein Teil des Wärmeaustauschfluids aus der Festbettspeichereinheit 20 gespeist werden, wenn sich diese beim Abkühlen des Stoffstroms b erwärmt und ausdehnt, wie hier gestrichelt dargestellt. Der Tieftemperaturspeicher 31 kann mit einer in dem ersten Betriebsmodus nicht aktiven Zwangsverdampfung 32 ausgestattet sein, die bewirkt, dass in dem Tieftemperaturspeicher 31 das Speicherdruckniveau aufrechterhalten wird und gleichzeitig ein Teil der dabei verdampften Luft in Form eines Stoffstroms k in der Luftverflüssigungseinheit 20 genutzt werden kann.

Der Luftverflüssigungseinheit 20 können Mitteldruckluft (MP AIR) in Form eines Stoffstroms I und optional Niederdruckluft (LP AIR) in Form eines Stoffstroms m zugeführt und entnommen werden. Die Energiegewinnungseinheit 40 ist in dem in Figur 1 veranschaulichten Energiespeicherzeitraum nicht in Betrieb, es wird lediglich verflüssigte Luft in den Tieftemperaturspeicher 31 der Tieftemperaturspeichereinheit 30 eingespeist. Auch eine Pumpe 17, die als Teil der Festbettspeichereinheit 10 vorgesehen ist, ist in dem Energiespeicherzeitraum nicht in Betrieb. Dies gilt auch für den Zwangsverdampfer 32.

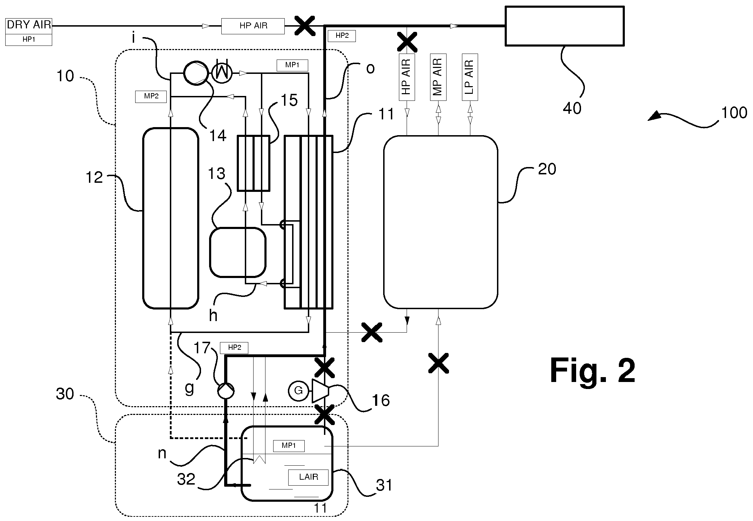

In Figur 2 ist die bereits in Figur 1 veranschaulichte Anlage 100, jedoch in einem zweiten Betriebsmodus bzw. dem Energierückgewinnungszeitraum, veranschaulicht. In diesem Energierückgewinnungszeitraum wird keine Druckluft in Form des Stoffstroms a (siehe Figur 1) bereitgestellt und die Stoffströme g, h und i werden in entgegengesetzter Strömungsrichtung in der Festbettkältespeichereinheit 10 durch die erläuterten Elemente geführt. Hierzu wird die Pumpe 14 gegenläufig betrieben.

In dem zweiten Betriebsmodus wird ferner dem Tieftemperaturspeicher 31 der Tieftemperaturspeichereinheit 30 Flüssigluft mittels der Pumpe 17 entnommen. Mittels eines Teils dieser, in Form eines Stoffstroms n veranschaulichten Flüssigluft, wird der Zwangsversampfer 32 betrieben, so dass das Speicherdruckniveau in dem Tieftemperaturspeicher trotz Entnahme der Flüssigluft aufrechterhalten werden kann. Ein Druckverlust in dem durch die Stoffströme g, h und i gebildeten Wärmeaustauschmittelkreislauf kann durch ein Einspeisen von Gas aus dem Tieftemperaturtank ausgeglichen werden, wie hier gestrichelt dargestellt.

Die Flüssigluft des Stoffstroms n wird in den Wärmetauscher 11 der Festbettkältespeichereinheit 10 erwärmt. Hierbei wird Wärme von den Stoffströmen g und h auf den Stoffstrom n übertragen. Dies Stoffströme g und h kühlen sich hierdurch ab und entziehen den Festbettkältespeichern 12 und 13 Wärme. Die Festbettkältespeicher 12 und 13 kühlen sich hierdurch ab, so dass in dem Energiespeicherzeitraum unter Verwendung dieser Festbettkältespeicher 12 und 13 und des Wärmeaustauschfluids der Stoffströme g, h und i eine Abkühlung des ersten Druckluftstroms b (siehe Figur 1) möglich ist.

Durch die Erwärmung des Stoffstroms n wird aus diesem ein Druckstrom auf einem zweiten Druckniveau (HP2) gebildet, der hier mit o veranschaulicht ist. Der Druckstrom o wird auf dem zweiten Druckniveau in die Energiegewinnungseinheit 40 überführt.

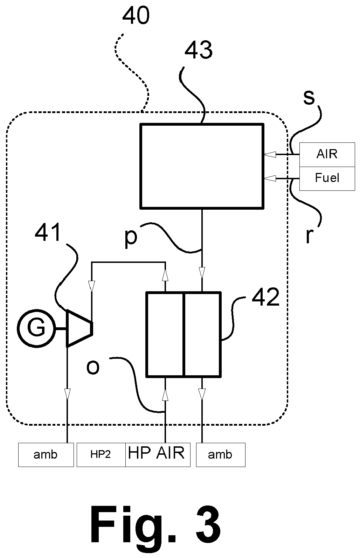

In Figur 3 sind Details einer entsprechenden Energiegewinnungseinheit 40 näher veranschaulicht. Diese umfasst eine Generatorturbine 41, in welcher der Stoffstrom o (siehe Figur 2) entspannt wird. Der entspannte Stoffstrom o wird anschließend im dargestellten Beispiel in die Atmosphäre (amb) abgeblasen. Vor seiner Entspannung in der Generatorturbine 31 wird der Stoffstrom o in einem Wärmetauscher 42 weiter erwärmt und hierdurch weiter druckerhöht. Zur Erwärmung wird ein Turbinenabgasstrom p einer Gasturbine 43 verwendet, welcher im dargestellten Beispiel ein Brenngasstrom r (Fuel) und ein Luftstrom s (AIR) zugeführt werden. Anstelle nur einer Entspannungsmaschine, wie hier dargestellt, können auch mehrere Entspannungsmaschinen eingesetzt werden. Entsprechendes gilt für den Wärmetauscher 42. Es kann auch Abwärme aus externen Quellen oder in Wärmespeichersystemen gespeicherte Wärme zum Einsatz kommen.

In Figur 4 sind Details einer Hauptluftverdichtereinheit dargestellt, die in einem Verfahren gemäß einer Ausführungsform einer Erfindung zum Einsatz kommen kann. Insbesondere kann unter Verwendung der Hauptluftverdichtereinheit, die hier insgesamt mit 50 bezeichnet ist, Mitteldruckluft (MP AIR) auf einem Mitteldruckniveau (MP1), wie hier in Form des Stroms t veranschaulicht, bereitgestellt werden. Hierzu wird Umgebungsluft (AIR), insbesondere auf Atmosphärendruck (amb), durch einen Filter 51 angesaugt und anschließend in einem mehrstufigen Luftverdichter mit Zwischenkühlung, wie hier insgesamt mit einem Verdichter 52 und einem Kühler 53 veranschaulicht, verdichtet.

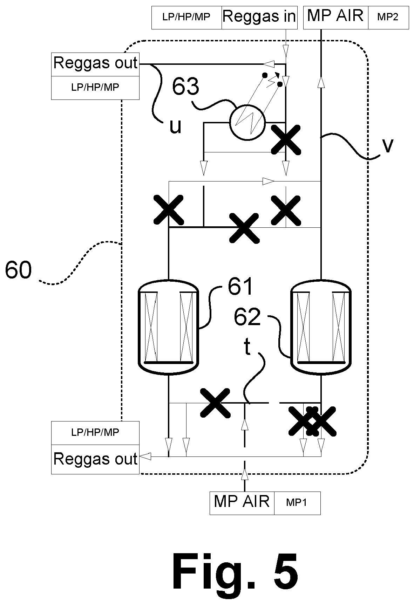

Die mittels der Hauptluftverdichtereinheit 50 bereitgestellte, in Figur 4 in Form des Stoffstroms t veranschaulichte Luft kann anschließend einer in Figur 5 schematisch veranschaulichten und mit 60 bezeichneten Luftkonditioniereinheit zugeführt werden. Die Luftkonditioniereinheit 60 umfasst als wesentliche Elemente zwei im Wechselbetrieb arbeitende Adsorber und 61 und 62, die unter Verwendung eines Regeneriergases (Reggas in/Reggas out) auf einem geeigneten Druckniveau regeneriert werden können. Eine Regeneriergasheizung 63 kann zum Aufheizen des Regeneriergases, das hier in Form eines Stroms u veranschaulicht wird, verwendet werden. Zur Veranschaulichung der Einbindung der Luftkonditioniereinheit 60 dient der bereits erwähnte Strom t, ein in der Luftkonditioniereinheit 60 aufbereiteter Stoffstrom ist mit v bezeichnet. Alternativ zu der veranschaulichten Ausgestaltung können auch beispielsweise Anordnungen mit nur einem Adsorber zum Einsatz kommen. Ist dies der Fall, wird der Adsorber in dem zweiten Betriebsmodus regeneriert.

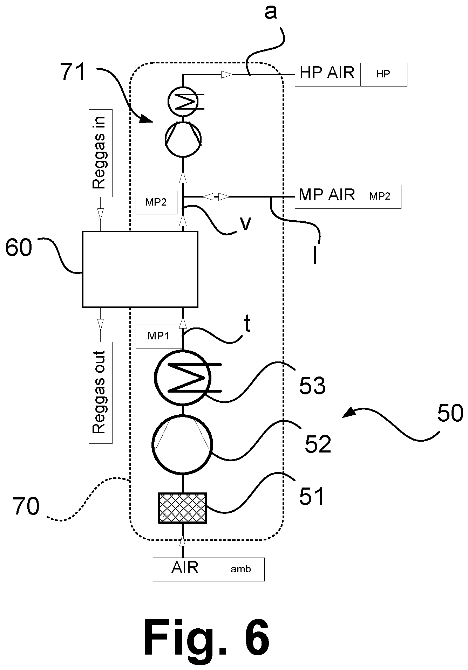

In Figur 6 ist eine erweiterte Verdichtereinheit, die in einem Verfahren gemäß einer Ausführungsform der Erfindung zum Einsatz kommen kann, veranschaulicht. Diese ist insgesamt mit 70 bezeichnet. Sie umfasst die bereits zuvor veranschaulichten Elemente, nämlich insbesondere die Hauptluftverdichtereinheit 50 mit ihren entsprechenden Elementen und die Luftkonditioniereinheit 60, die hier stark schematisiert gezeigt ist. Wie in Figur 6 veranschaulicht, kann unter Verwendung eines mehrstufigen Nachverdichters, der insbesondere mit Zwischenkühler ausgestattet sein kann und hier insgesamt mit 71 bezeichnet ist, der bereits in Figur 1 veranschaulichte Druckluftstrom a unter Verwendung eines Anteils der Luft des Stoffstroms v bereitgestellt werden. Ein stromauf des Nahverdichters 71 abgezweigter Anteil des Stoffstroms v bildet den hier, wie bereits in Figur 1, mit I bezeichneten Mitteldruckluftstrom I. Wie gezeigt, kann anstelle einer Entnahme des Stoffstroms I auch eine Einspeisung desselben erfolgen.

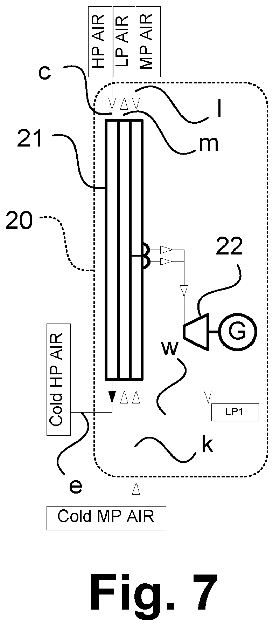

In Figur 7 ist eine Verflüssigungseinheit 20, wie sie in einem Verfahren gemäß einer Ausführungsform der Erfindung zum Einsatz kommen kann, schematisch veranschaulicht und, wie in Figur 1, mit 20 bezeichnet. Dieser wird der bereits in Figur 1 veranschaulichte zweite Druckluftstrom c (HP AIR) zugeführt. Der zweite Druckluftstrom c wird in einem Wärmetauscher 21 der Luftverflüssigungseinheit zu dem ebenfalls in Figur 1 gezeigten Stoffstrom e (Cold HP AIR) verflüssigt. Die hierzu erforderliche Kälte liefert einerseits eine Entspannung des ebenfalls in Figur 1 gezeigten Stoffstroms I, also von Mitteldruckluft (MP AIR). Der Stoffstrom I wird hierzu durch einen Abschnitt des Wärmetauschers 21 geführt und anschließend im dargestellten Beispiel in einer Generatorturbine 22 auf ein Niederdruckniveau (LP1) entspannt. Zur Verflüssigung des zweiten Druckluftstroms c erforderliche Kälte wird außerdem durch eine Entspannung des ebenfalls bereits in Figur 1 gezeigten Stoffstroms k (Cold MP AIR) bereitgestellt. Der Stoffstrom k wird ebenfalls durch einen Abschnitt des Wärmetauschers 20 geführt und in der Generatorturbine 22 zusammen mit dem Stoffstrom I entspannt. Ein entspannter Sammelstrom, insgesamt mit w bezeichnet, wird anschließend vom kalten zum warmen Ende durch den Wärmetauscher 21 geführt und verlässt diesen in Form des ebenfalls bereits in Figur 1 gezeigten Stoffstroms m (LP AIR).

Die in den Figuren 1 bis 7 dargestellten Ausführungsformen der Erfindung beziehungsweise ihren verwendbaren Komponenten können vielfache Variationen erfahren. Insbesondere ist die Anzahl der in dem Verfahren eingesetzten Festbettkältespeicher nicht auf zwei begrenzt, es können vielmehr eine beliebige Anzahl entsprechender Festbettkältespeicher und damit auch entsprechende Wärmeaustauschfluidströme eingesetzt werden. Die Luftverflüssigungseinheit 20 ist nicht auf das in Figur 7 veranschaulichte Beispiel beschränkt, beispielsweise können Hoch- und Mitteldruckturbinen oder unterschiedliche Kombinationen hiervon zum Einsatz kommen. Anstelle einer Generatorturbine, wie sie in Figur 7 gezeigt ist, kann auch eine Boosterturbine verwendet werden. Anstelle einer Verflüssigungseinheit 20 kann externer Verflüssiger mit einem separaten Verdichter, der mit Luft oder Stickstoff als Kühlmittel betrieben wird, eingesetzt werden. Auch externe Verflüssiger auf Grundlage von Gemischkältemittelkreisläufen können verwendet werden.

Figur 8 zeigt ein nicht erfindungsgemäßes Wärmeaustauschdiagramm, Figur 9 ein Wärmeaustauschdiagramm, das gemäß einer bevorzugten Ausführungsform der vorliegenden Erfindung erzielt werden kann. In beiden Diagrammen ist ein Wärmefluss auf der Abszisse in kW gegenüber einer Temperatur in °C auf der Ordinate dargestellt. Der durchgezogene Graph bezieht sich jeweils auf Luft als Wärmeaustauschmedium, der gestrichelte Graph (in beiden Figuren identisch) auf das jeweils abgekühlte bzw. erwärmte Druckfluid, d.h. den Druckluftstrom in dem ersten und den Flüssigstrom in dem zweiten Betriebsmodus. Wie aus den Figuren 8 und 9 ersichtlich, besitzt die Wärmekapazität entsprechender Hochdruckluft (sowohl in der Einspeicherungsphase als auch in der Ausspeicherungsphase) bei tiefen Temperaturen einen stark ausgeprägten nichtlinearen Verlauf.

Würde nur ein Festbettkältespeicher eingesetzt, würde das Wärmeaustauschdiagramm gemäß Figur 8 erhalten. Es würden große Temperaturdifferenzen im Wärmetauscher und große exergetische Verluste resultieren. Das Gesamtsystem wäre dadurch ineffizient und nicht mehr wirtschaftlich. Wird ein Festbettspeichersystem verwendet, wie gemäß einer Ausführungsform der Erfindung vorgeschlagen, kann dagegen ein Wärmeaustauschdiagramm gemäß Figur 9 erzielt werden. Der nichtlineare Verlauf der Wärmekapazität kann durch die Verwendung der mehreren Festbettspeicher approximiert werden. Die exergetischen Verluste reduzieren sich.

## Patentansprüche

1. Verfahren zum Speichern und Rückgewinnen von Energie, bei dem eine tiefkalte Speicherflüssigkeit bereitgestellt wird, die in einem ersten Betriebsmodus zumindest zum Teil unter Verwendung eines Druckluftstroms gebildet wird, der abgekühlt und zumindest teilweise verflüssigt wird, und bei dem unter Verwendung zumindest eines Teils der Speicherflüssigkeit in einem zweiten Betriebsmodus ein tiefkalter Flüssigstrom gebildet wird, der druckbeaufschlagt, erwärmt, in den gasförmigen oder überkritischen Zustand überführt und zur Gewinnung von Energie verwendet wird, wobei das Abkühlen des Druckluftstroms in dem ersten Betriebsmodus umfasst, Wärme mittels eines Wärmeaustauschfluids von dem Druckluftstrom in ein Festbettspeichersystem (9) zu übertragen, und wobei das Erwärmen des tiefkalten flüssigen Stroms in dem zweiten Betriebsmodus umfasst, Wärme mittels des Wärmeaustauschfluids aus dem Festbettspeichersystem (9) auf den Flüssigstrom zu übertragen, **dadurch gekennzeichnet, dass** das Wärmeaustauschfluid auf einem Druckniveau von 3 bis 30 bar verwendet wird, dass als das Festbettspeichersystem (9) ein Festbettspeichersystem (9) verwendet wird, das einen ersten und einen zweiten Festbettspeicher (12, 13) umfasst, die in unterschiedlichen Temperaturbereichen betrieben werden, und dass der Druckluftstrom zum Abkühlen und der Flüssigstrom zum Erwärmen jeweils einem Wärmetausch mit einem ersten Anteil des Wärmeaustauschfluids über eine erste Wärmeaustauschstrecke und einem Wärmetausch mit einem zweiten Anteil des Wärmeaustauschfluids über eine zweite Wärmeaustauschstrecke unterworfen werden, wobei der erste Anteil des Wärmeaustauschfluids vor dem Wärmetausch mit dem Druckluftstrom in dem ersten Festbettspeicher (12) abgekühlt und nach dem Wärmetausch mit dem Flüssigstrom in dem ersten Festbettspeicher (12) erwärmt wird und der zweite Anteil des Wärmeaustauschfluids vor dem Wärmetausch mit dem Druckluftstrom in dem zweiten Festbettspeicher (13) abgekühlt und nach dem Wärmetausch mit dem Flüssigstrom in dem zweiten Festbettspeicher (13) erwärmt wird.

2. Verfahren nach Anspruch 1, bei dem die zweite Wärmeaustauschstrecke eine Teilstrecke der ersten Wärmeaustauschstrecke darstellt.

3. Verfahren nach Anspruch 2, bei dem die zweite Wärmeaustauschstrecke nach dem Beginn der ersten Wärmeaustauschstrecke beginnt und/oder vor dem Ende der ersten Wärmeaustauschstrecke endet.

4. Verfahren nach einem der vorstehenden Ansprüche, bei dem der zweite Anteil des Wärmeaustauschfluids vor dem Abkühlen in dem Festbettspeicher (13) gegen den zuvor im Gegenstrom zu dem Druckluftstrom geführten zweiten Anteil des Wärmeaustauschfluids abgekühlt und nach dem Erwärmen in dem Festbettspeicher (13) in dem zweiten Betriebsmodus gegen den danach im Gegenstrom zu dem Druckluftstrom geführten zweiten Anteil des Wärmeaustauschfluids abgekühlt wird.

5. Verfahren nach einem der vorstehenden Ansprüche, bei dem das Wärmeaustauschfluid zumindest teilweise aus einem Tieftemperaturspeichersystem (31) entnommen und in dieses eingespeist wird, in dem auch die Speicherflüssigkeit dem ersten Betriebsmodus bereitgestellt wird.

6. Verfahren nach einem der vorstehenden Ansprüche, bei dem der Druckluftstrom in dem ersten Betriebsmodus der Abkühlung auf einem ersten Druckniveau von 40 bis 150 bar, insbesondere von 50 bis 120 bar, zugeführt wird.

7. Verfahren nach Anspruch 6, bei dem in dem zweiten Betriebsmodus aus dem Flüssigstrom durch die Überführung in den gasförmigen oder überkritischen Zustand ein Abgabestrom auf einem zweiten Druckniveau von 40 bis 180 bar, insbesondere von 50 bis 150 bar, bereitgestellt wird.

8. Verfahren nach Anspruch 7, bei dem das zweite Druckniveau zumindest bei dem ersten Druckniveau liegt.

9. Verfahren nach Anspruch 7 oder 8, bei dem der Abgabestrom zum Antreiben wenigstens einer Generatorturbine (41) verwendet wird.

10. Verfahren nach Anspruch 9, bei dem der Abgabestrom vor der Verwendung zum Antreiben der Generatorturbine (41) erwärmt wird.

11. Verfahren nach Anspruch 10, das umfasst, eine Gasturbine (43) unter Erhalt eines Turbinenabgases mit einem Brenngas zu befeuern, wobei das Erwärmen des Abgabestroms zumindest teilweise unter Verwendung zumindest eines Teils des Turbinenabgases durchgeführt wird.

12. Verfahren nach einem der vorstehenden Ansprüche, bei dem in dem ersten Betriebsmodus der abgekühlte und zumindest teilweise verflüssigte Druckluftstrom nach der Abkühlung auf ein Speicherdruckniveau von 3 bis 20 bar, insbesondere von 6 bis 16 bar, entspannt und auf dem Speicherdruckniveau in ein Tieftemperaturspeichersystem (30) eingespeist wird.

13. Anlage (100) zum Speichern und Rückgewinnen von Energie, mit Mitteln, die dafür eingerichtet sind, eine tiefkalte Speicherflüssigkeit bereitzustellen und diese in einem ersten Betriebsmodus zumindest zum Teil unter Verwendung eines Druckluftstroms zu bilden, der abgekühlt und zumindest teilweise verflüssigt wird, und mit Mitteln, die dafür eingerichtet sind, unter Verwendung zumindest eines Teils der Speicherflüssigkeit in einem zweiten Betriebsmodus einen tiefkalten Flüssigstrom zu bilden wird, der druckbeaufschlagt, erwärmt, in den gasförmigen oder überkritischen Zustand überführt und zur Gewinnung von Energie verwendet wird, wobei das Abkühlen des Druckluftstroms in dem ersten Betriebsmodus umfasst, Wärme mittels eines Wärmeaustauschfluids von dem Druckluftstrom in ein Festbettspeichersystem (9) zu übertragen, und wobei das Erwärmen des tiefkalten flüssigen Stroms in dem zweiten Betriebsmodus umfasst, Wärme mittels des Wärmeaustauschfluids aus dem Festbettspeichersystem (9) auf den Flüssigstrom zu übertragen, **dadurch gekennzeichnet, dass** Mittel vorgesehen sind, die dafür eingerichtet sind, das Wärmeaustauschfluid auf einem Druckniveau von 3 bis 30 bar einzusetzen, dass als das Festbettspeichersystem (9) ein Festbettspeichersystem (9) bereitgestellt ist, das einen ersten und einen zweiten Festbettspeicher (12, 13) umfasst, die für einen Betrieb in unterschiedlichen Temperaturbereichen eingerichtet sind, und dass Mittel vorgesehen sind, die dafür eingerichtet sind, den Druckluftstrom zum Abkühlen und den Flüssigstrom zum Erwärmen jeweils einem Wärmetausch mit einem ersten Anteil des Wärmeaustauschfluids über eine erste Wärmeaustauschstrecke und einem Wärmetausch mit einem zweiten Anteil des Wärmeaustauschfluids über eine zweite Wärmeaustauschstrecke zu unterwerfen, bei dem der erste Anteil des Wärmeaustauschfluids vor dem Wärmetausch mit dem Druckluftstrom in dem ersten Festbettspeicher (12) abgekühlt und nach dem Wärmetausch mit dem Flüssigstrom in dem ersten Festbettspeicher (12) erwärmt wird und der zweite Anteil des Wärmeaustauschfluids vor dem Wärmetausch mit dem Druckluftstrom in dem zweiten Festbettspeicher (13) abgekühlt und nach dem Wärmetausch mit dem Flüssigstrom in dem zweiten Festbettspeicher (13) erwärmt wird.
